# EUROPEAN PATENT APPLICATION

(11) **EP 4 201 814 A1**
(43) Date of publication of application: **28.06.2023**
(21) Application number: 22211388.8
(22) Date of filing: 05.12.2022
(51) Int. Cl.: B64D 13/06, B01D 45/16

(54) **MULTISTAGE SWIRLER FOR ENVIRONMENTAL CONTROL SYSTEM**

(30) Priority: 22.12.2021 US 202117559463
(71) Applicant: Hamilton Sundstrand Corporation, Charlotte, NC 28217-4578 (US)
(72) Inventor: MCCORD, Patrick, Norwich, CT, 06360 (US); ARMY, Donald E., Enfield, CT, 06082 (US)
(74) Representative: Dehns

(57) **Abstract**

A water separation mechanism includes a housing (40) having a hollow interior (43), an inlet and an outlet, and a center body (50) arranged within the hollow interior. A plurality of coalescing features are mounted about a periphery of the center body in a plurality of stages. The plurality of stages are arranged in series relative to a direction of an airflow through the housing. The plurality of coalescing features are configured to separate the airflow into a wet first airstream and a dry second airstream.

## Description

### BACKGROUND

Embodiments of the present disclosure relate to the art of aircraft environmental control systems (ECSs), and in particular to water removal or dehumidification of an airflow within an ECS.

As a humid airflow is cooled within an environmental control system of an aircraft, condensation typically forms resulting in moisture being entrained within the airflow. This moisture, which is commonly droplets of water, is generally removed by a water collector. If the moisture is not removed from the airflow, the moisture may freeze causing a build-up of ice on one or more component of the environmental control system. The ice can lead to imbalance due to non-uniform shedding thereof, thereby reducing system reliability and efficiency. The moisture buildup may also lead to corrosion of the system components.

### BRIEF DESCRIPTION

In one aspect, a water separation mechanism includes a housing having a hollow interior, an inlet and an outlet, and a center body arranged within the hollow interior. A plurality of coalescing features are mounted about a periphery of the center body in a plurality of stages. The plurality of stages are arranged in series relative to a direction of an airflow through the housing. The plurality of coalescing features are configured to separate the airflow into a wet first airstream and a dry second airstream.

In embodiments, the plurality of coalescing features are configured to impart a swirl to the airflow.

In embodiments, the plurality of stages includes a first stage having at least one first coalescing feature and a second stage having at least one second coalescing feature.

In embodiments, the at least one second coalescing feature is arranged downstream from a distal end of the at least one first coalescing feature.

In embodiments, the at least one second coalescing feature axially overlaps with the at least one first coalescing feature.

In embodiments, the at least one second coalescing feature is rotationally offset from the at least one first coalescing feature.

In embodiments, the at least one first coalescing feature includes a first plurality of vanes extending outwardly from the center body and the at least one second coalescing feature includes a second plurality of vanes extending outwardly from the center body.

In embodiments, at least one of the first plurality of vanes and the second plurality of vanes has a tapered configuration.

In embodiments, the first plurality of vanes are substantially identical to the second plurality of vanes.

In embodiments, at least one of the first plurality of vanes is different from at least one of the second plurality of vanes.

In embodiments, each of the first plurality of vanes overlaps with another of the first plurality of vanes about the periphery of the center body.

In embodiments, the first plurality of vanes wrap about an entire periphery of the center body.

In embodiments, the water separation mechanism is part of an environmental control system.

In another aspect, an environmental control system of an aircraft includes a turbine configured to extract energy and heat from an airflow and a water separation mechanism arranged in fluid communication with an outlet of the turbine and operable to separate the airflow into a first airstream having water entrained therein and a second airstream. The water separation mechanism includes a housing having a hollow interior, a center body arranged within the hollow interior, and a plurality of coalescing features mounted about a periphery of the center body in a plurality of stages. The plurality of stages are arranged in series relative to a direction of the airflow through the housing.

In embodiments, the airflow at the outlet of the turbine has water entrained therein, and the water entrained within the airflow is a fog.

In embodiments, the plurality of stages includes a first stage having at least one first coalescing feature and a second stage having at least one second coalescing feature.

In embodiments, the at least one second coalescing feature is arranged downstream from a distal end of the at least one first coalescing feature.

In embodiments, the at least one second coalescing feature axially overlaps with the at least one first coalescing feature.

In embodiments, the at least one second coalescing feature is rotationally offset from the at least one first coalescing feature.

In embodiments, the at least one first coalescing feature includes a first plurality of vanes and the at least one second coalescing feature includes a second plurality of vanes.

### BRIEF DESCRIPTION OF THE DRAWINGS

The following descriptions should not be considered limiting in any way. With reference to the accompanying drawings, like elements are numbered alike:
FIG. 1 is a schematic diagram of a portion of an environmental control system according to an embodiment;
FIG. 2 is a side view of a water separation mechanism according to an embodiment;
FIG. 3 is a perspective view of the water separation mechanism of FIG. 2 according to an embodiment;
FIG. 4 is another perspective view of the water separation mechanism of FIG. 2 according to an embodiment;
FIG. 5 is a cross-sectional view of the water separation mechanism of FIG. 2 according to an embodiment; and
FIG. 6 is an end view of the water separation mechanism of FIG. 2 according to an embodiment.

### DETAILED DESCRIPTION

A detailed description of one or more embodiments of the disclosed apparatus and method are presented herein by way of exemplification and not limitation with reference to the Figures.

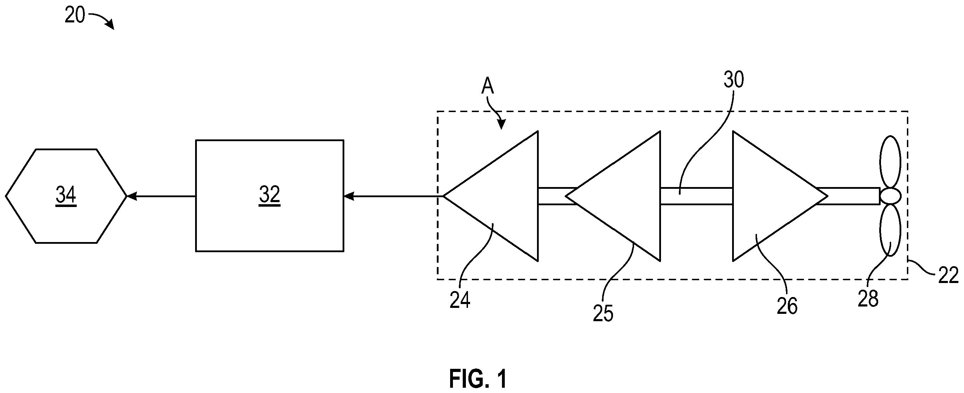

With reference now to the FIG. 1, an exemplary portion of an environmental control system 20 is illustrated. As shown, the environmental control system (ECS) 20 includes an air cycle machine 22 having a turbine 24. In some embodiments the air cycle machine 22 additionally includes one or more other components, such as a second turbine 25, a compressor 26 and/or a fan 28 operably coupled to the turbine 24 by a rotatable shaft 30 for example. In the illustrated, non-limiting embodiment, a water separation mechanism 32 is arranged downstream from the outlet of the turbine 24. In embodiments where the ECS 20 includes a first turbine 24 and a second turbine 25 configured to receive the same air flow in series, the water separation mechanism 32 is located downstream from the first turbine 24 and upstream from the second turbine 25. However, it should be understood that embodiments where the water separation mechanism 32 is arranged downstream from any suitable component of the ECS 20 are also contemplated herein. In an embodiment, the water separation mechanism 32 is positioned within the ECS 20 to receive a flow of medium or air A that is cool but has a temperature above freezing. Moisture entrained within the airflow cooled via the turbine 24 condenses to generate a fog-like consistency. The water separation mechanism 32 in fluid communication with the outlet of the turbine 24 is configured to coalesce the water within the airflow into larger droplets for collection downstream

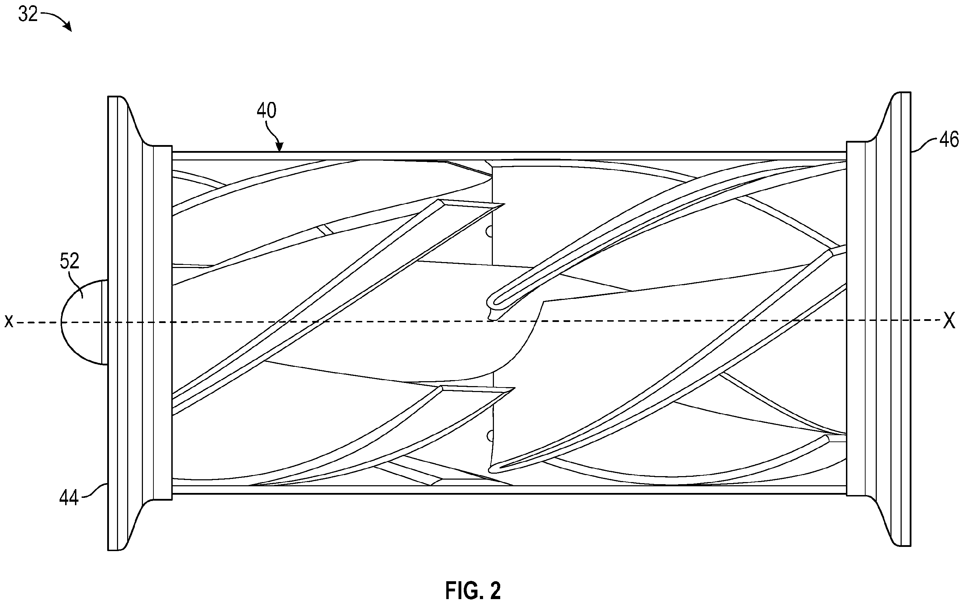

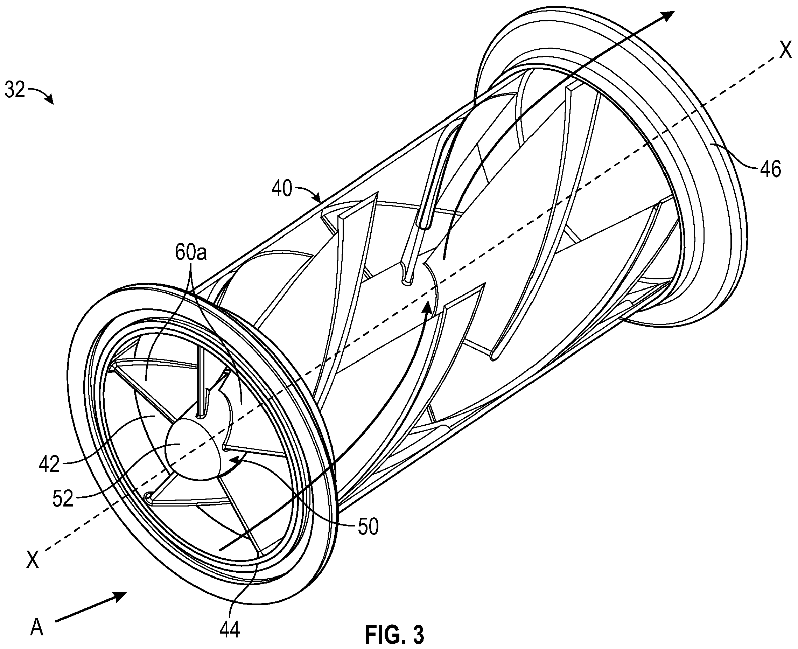

With reference now to FIGS. 2-5 an example of a water separation mechanism 32 for use in an ECS 20 is illustrated. The water separation mechanism 32 is configured to separate water from an airflow provided thereto. As shown, an outlet of the water separation mechanism 32 may be fluidly coupled to a downstream water extraction vessel 34 (see FIG. 1). In an embodiment, the water separation mechanism 32 is arranged directly within the ducting or conduit extending between the outlet of the turbine 24 and the inlet of the water extraction vessel 34, and therefore is a separate component from the water extraction vessel 34; however, embodiments where the water separation mechanism 32 and the water extraction vessel 34 are integrally formed, such a via an additive manufacturing process for example, are also within the scope of the disclosure.

The water separation mechanism 32 includes a housing or body 40 having a hollow interior 42 and a first, upstream end 44 and a second, downstream end 46 relative to an airflow A. A longitudinal axis X of the housing 40 extends between the first end 44 and the second end 46. In the illustrated, non-limiting embodiment, an inlet is formed at the upstream end 44 of the housing 40, and an outlet is arranged at the downstream end 46 thereof. Although the inlet and the outlet are both illustrated as being substantially equal in diameter to the hollow interior 42 of the housing 40, embodiments where the inlet and/or outlet are smaller than the respective upstream and downstream ends 44, 46 are also contemplated herein. The outlet at the downstream end 46 may be directly or indirectly connected to the water extraction vessel 34.

As shown, the housing 40 has a substantially cylindrical configuration with a generally constant diameter extending between the upstream end 44 and the downstream end 46. However, embodiments where the housing 40 has another shape or configuration are also within the scope of the disclosure.

In an embodiment, a center body 50 is arranged within the hollow interior 42 of the housing 40, along at least a portion of the longitudinal axis X thereof. For example, the center body 50 may be integrally formed with or coupled to a portion of the housing 40. The axial length of the center body 50 may be less than the axial length of the housing 40. As shown, a first end 52 of the center body 50 is arranged near the upstream end 44 of the housing 40 and the second, opposite end 54 of the center body 50 is arranged at a generally central portion of the hollow interior 42. In other embodiments, the second end 54 of the center body 50 may be located at, or even beyond the downstream end 46 of the housing 40.

In an embodiment, the first end 52 of the center body 50 is located external to the housing 40, such as upstream from the first upstream end 44 of the housing 40 relative to the airflow A. However, embodiments where the first end 52 is arranged at a position within the hollow interior 42 of the housing 40 are also contemplated herein.

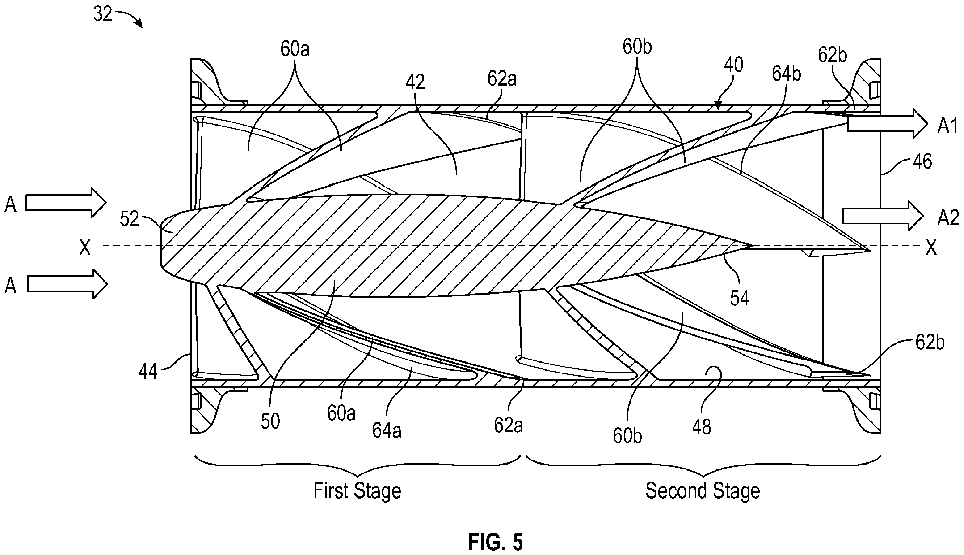

The center body 50 may have a shape similar to or different from the shape of the housing 40. For example, as best shown in FIG. 5, the center body 50 is generally conical in shape with the diameter gradually decreasing in the direction of the airflow A. In another embodiment, the diameter of the center body 50 has a substantially constant diameter resulting in a generally cylindrical in shape. It should be understood that any suitable shape, such as any aerodynamic shape for example it contemplated herein. Regardless of shape, the longitudinal axis of the center body 50 and the longitudinal axis X of the housing 40 are arranged generally coaxially. An outer diameter of the center body 50 is smaller than an inner diameter of the housing 40 such that the airflow A is able to flow about the periphery of the center body 50, between the center body 50 and the interior surface 48 of the housing 40, over the length of the housing 40.

The water separation mechanism 32 additionally includes one or more coalescing features configured to enhance the formation of a water stream adjacent to the interior surface 48 of the housing 40. In the illustrated, non-limiting embodiment, the at least one coalescing feature includes a plurality of vanes formed about a periphery of the center body 50 and protruding outwardly therefrom. The vanes may extend at an angle relative to the longitudinal axis X as shown. Although the angle in the illustrated, non-limiting embodiment is less than 90 degrees, embodiments where one or more of the vanes is oriented perpendicular to the longitudinal axis X, and embodiments where one or more of the vanes extends parallel to the longitudinal axis X are also within the scope of the disclosure.

In an embodiment, the one or more coalescing features may be arranged into a plurality of stages in series relative to the airflow A. For example, the first stage includes at least one first coalescing feature and the second stage includes at least one second coalescing feature. As best shown in FIG. 5, vanes are arranged in groups to form a respective first stage and a second stage. However, it should be understood that embodiments having more than two stages of vanes and/or another coalescing feature are also contemplated here.

In an embodiment, the at least one first coalescing feature of the first stage includes a first plurality of vanes 60a mounted at a first location of the center body 50 and the at least one second coalescing feature of the second stage includes a second plurality of vanes 60b mounted at a second location of the center body 50. The second location is arranged generally downstream from the first location. In the illustrated, non-limiting embodiment, the first plurality of vanes 60a are arranged generally near the first end 52 of the center body 50 and the second plurality of vanes 60b are arranged generally near the second end 54 of the center body 50. For example, the distal end 62b of the second plurality of vanes 60b may be arranged generally at or directly upstream from the downstream end 46 of the housing 40. However, embodiments where one or both of the first and second pluralities of vanes 60a, 60b are arranged at another location about the center body 50 are also contemplated herein.

In the illustrated, non-limiting embodiment, the interface between the second plurality of vanes 60b and the center body 50 is arranged axially downstream from the distal end 62a of each of the first plurality of vanes 60a. Accordingly, the second plurality of vanes 60b do not axially overlap the first plurality of vanes 60a. However, in other embodiments, the first plurality of vanes 60a and the second plurality of vanes 60b may be nested about the center body 50. In such embodiments, at least a portion of one or more of the first plurality or vanes 60a axially overlaps a portion of one or more of the second plurality of vanes 60b.

An outer edge 64a, 64b of or one or more of the vanes 60a, 60b within each stage may be connected to or arranged in contact with the interior surface 48 of the housing 40. In an embodiment, the vanes 60a, 60b are integrally formed with the center body 50, and are used to mount the center body 50 within the hollow interior 42. In addition, the vanes 60a, 60b as shown in the FIGS. may have a generally tapered configuration. It should be understood that embodiments where one or more of the vanes has a different configuration, such as a constant width for example, are within the scope of the disclosure.

Further, the one or more coalescing features within the first stage, may have a similar configuration, or alternatively, a different configuration than the one or more coalescing features within the second stage. In embodiments where the first stage includes a first plurality of vanes 60a and the second stage includes a second plurality of vanes 60b, the total number and the geometry of the vanes, including the swirl direction (clockwise or counterclockwise), size, and/or shape of the first plurality of vanes 60a, may be the same or different than that of the second plurality of vanes 60b. Further, in an embodiment, the second plurality of vanes 60b is peripherally aligned with the first plurality of vanes 60a about the center body 50, as shown in FIG. 5. However, in other embodiments, the second plurality of vanes 60b may be rotated about the longitudinal axis X relative to the first plurality of vanes 60a, such that the second stage is skewed or rotationally offset from the first stage.

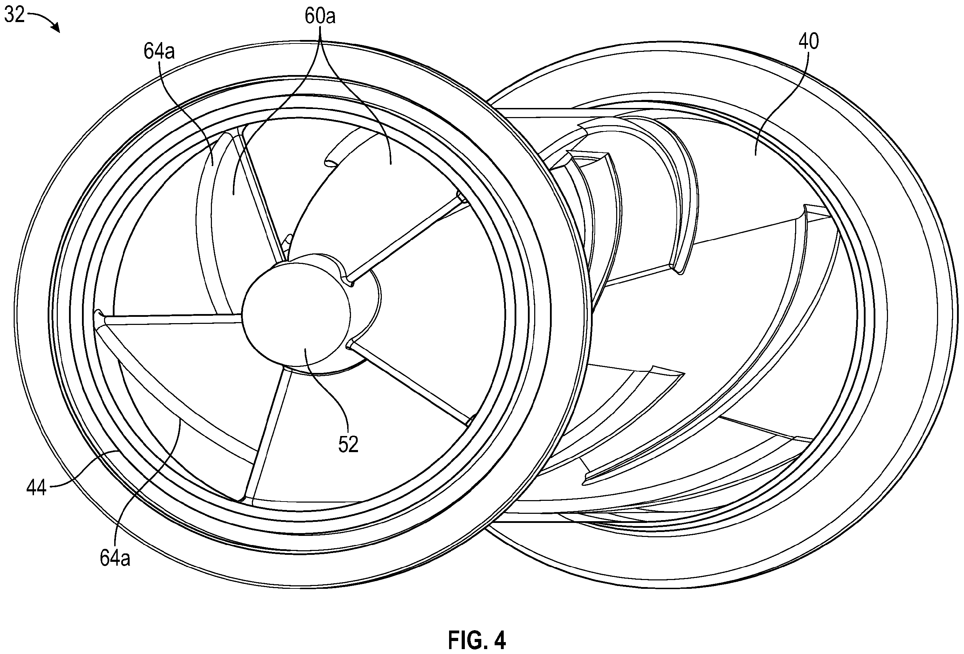

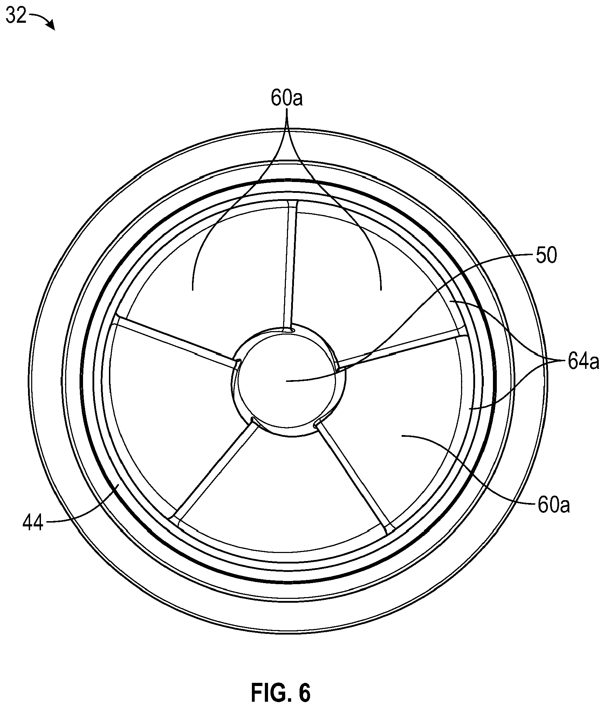

The vanes within at least one of the stages may be configured such that each vane overlaps with at least one adjacent vane about the periphery of the center body 50. In the illustrated, non-limiting embodiment, each of the first plurality of vanes overlaps with two other vanes within the first stage about the periphery of the center body 50. As a result, the first plurality of vanes 60a wrap about the entire periphery of the center body 50. This overlapping configuration, best shown in FIGS. 4 and 6, prevents the airflow A from passing linearly through the housing 40. Further, by overlapping adjacent vanes, the airflow A will have to contact one or more vane surfaces within the housing 40, achieving enhanced coalescing of the water droplets entrained within the airflow A. Although this overlap is described with respect to the first stage, it should be understood that the plurality of vanes 60b within the second stage may alternatively or additionally have this peripheral overlapping configuration.

In operation, an airflow A having condensation entrained therein in the form of fog is provided to the inlet at the upstream end 44 of the water separation mechanism 32. Within the water separation mechanism 32, a swirl is imparted to the airflow A, via the plurality of coalescing features. This rotation facilitates separation of the droplets of condensate from the airflow A. The centrifugal force acting on the rotating airflow A drives the droplets to the periphery of the airflow A, adjacent to the interior surface 48 of the housing 40. Upon reaching the interior surface 48, the droplets may coalesce into a wet first airstream Al and the dry air at the center of the housing 40 forms a dry second airstream A2.

Because the water separation mechanism 32 described herein uses a centrifugal collision coalescing process to separate the water, the water separation mechanism 32 can be compact. Further, the water separation mechanism 32 when used in combination with a high pressure water collector, such as water extraction vessel 34, may eliminate the need for a condenser positioned between the turbine outlet and the water collector within an environmental control system 20.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A water separation mechanism comprising:
a housing (40) having a hollow interior (42), an inlet, and an outlet;
a center body (50) arranged within the hollow interior; and
a plurality of coalescing features mounted about a periphery of the center body in a plurality of stages, the plurality of stages being arranged in series relative to a direction of an airflow through the housing, wherein the plurality of coalescing features are configured to separate the airflow into a wet first airstream and a dry second airstream.

2. The water separation mechanism of claim 1, wherein the plurality of coalescing features are configured to impart a swirl to the airflow.

3. The water separation mechanism of claim 1, wherein the plurality of stages includes a first stage having at least one first coalescing feature and a second stage having at least one second coalescing feature.

4. The water separation mechanism of claim 3, wherein the at least one second coalescing feature is arranged downstream from a distal end of the at least one first coalescing feature, and/or wherein the at least one second coalescing feature axially overlaps with the at least one first coalescing feature; and/or wherein the at least one second coalescing feature is rotationally offset from the at least one first coalescing feature.

5. The water separation mechanism of claim 3, wherein the at least one first coalescing feature includes a first plurality of vanes (60a) extending outwardly from the center body and the at least one second coalescing feature includes a second plurality of vanes (60b) extending outwardly from the center body.

6. The water separation mechanism of claim 5, wherein at least one of the first plurality of vanes and the second plurality of vanes has a tapered configuration.

7. The water separation mechanism of claim 5 or 6, wherein the first plurality of vanes are substantially identical to the second plurality of vanes, or wherein at least one of the first plurality of vanes is different from at least one of the second plurality of vanes.

8. The water separation mechanism of claim 5, 6 or 7, wherein each of the first plurality of vanes overlaps with another of the first plurality of vanes about the periphery of the center body.

9. The water separation mechanism of any of claims 5 to 8, wherein the first plurality of vanes wrap about an entire periphery of the center body.

10. The water separation mechanism of any preceding claim, wherein the water separation mechanism is part of an environmental control system.

11. An environmental control system of an aircraft, comprising:
a turbine (24) configured to extract energy and heat from an airflow; and
a water separation mechanism (32) arranged in fluid communication with an outlet of the turbine and operable to separate the airflow into a first airstream having water entrained therein and a second airstream, the water separation mechanism comprising:
a housing (40) having a hollow interior (42);
a center body (50) arranged within the hollow interior; and
a plurality of coalescing features mounted about a periphery of the center body in a plurality of stages, the plurality of stages being arranged in series relative to a direction of the airflow through the housing.

12. The environmental control system of claim 11, wherein the airflow at the outlet of the turbine has water entrained therein, and the water entrained within the airflow is a fog.

13. The environmental control system of claim 11 or 12, wherein the plurality of stages includes a first stage having at least one first coalescing feature and a second stage having at least one second coalescing feature.

14. The environmental control system of claim 13, wherein the at least one second coalescing feature is arranged downstream from a distal end of the at least one first coalescing feature, or wherein the at least one second coalescing feature axially overlaps with the at least one first coalescing feature, or wherein the at least one second coalescing feature is rotationally offset from the at least one first coalescing feature.

15. The environmental control system of claim 13 or 14, wherein the at least one first coalescing feature includes a first plurality of vanes (60a) and the at least one second coalescing feature includes a second plurality of vanes (60b).
